# EUROPEAN PATENT APPLICATION

(11) **EP 1 552 920 A1**
(43) Date of publication of application: **13.07.2005**
(21) Application number: 04257398.0
(22) Date of filing: 30.11.2004
(51) Int. Cl.: B32B 27/08, B32B 1/08, B65D 65/40

(54) **Multilayer polymer liner for a tubular container**

(30) Priority: 09.01.2004 US 755026
(71) Applicant: Sonoco Development, Inc., Hartsville, South Carolina 19550 (US)
(72) Inventor: Drummond, Michael T., Laurinburg, North Carolina 28352 (US)
(74) Representative: Kinsler, Maureen Catherine

(57) **Abstract**

The present invention includes methods and apparatus for making a tubular composite container having paperboard body plies and an unsupported polymer film liner adhered thereto. The polymer film liner is comprised of, in order, a first sealant layer, a second adhesive layer, a third polyamide layer, a fourth layer comprising an ethylene/vinyl alcohol copolymer, a fifth polyamide layer, a sixth adhesive layer, a seventh high density polyethylene layer and an eighth high density polyethylene layer. The resulting liner and the paperboard body plies are wound about the tube forming mandrel and adhered together so as to produce a lined tubular composite container.

## Description

### FIELD OF THE INVENTION

The present invention relates to method and apparatus for making tubular composite containers and, more particularly, to methods and apparatus for making such containers by wrapping a multilayer polymer liner and at least one paperboard strip about an axis and adhering the various strips together.

### BACKGROUND OF THE INVENTION

Food and drink products and other perishable items are often packaged in tubular composite containers that are sealed at both ends. These tubular containers typically include at least one structural body ply formed by wrapping a continuous strip of paperboard or other equivalent material around a mandrel of a desired shape to create a tubular structure. The body ply may be spirally wound around the mandrel or convolutely wrapped around the mandrel. In the case of spiral winding, at the downstream end of the mandrel, the tube is cut into discrete lengths and is then fitted with end closures to form the container.

Exposure to external moisture or gases could potentially spoil the food products stored within a container. As a result, a composite container usually includes a liner provided on the inner surface of the paperboard body plies that are adhered together to form the composite container. The liner generally is formed, at least in part, of polymer film and is designed to prevent the permeation of liquids or gases so as to prevent spoiling and also to eliminate leakage of any liquid contained in the food product.

Additionally, conventional liners often include an aluminum foil layer, which has good barrier properties and also imparts strength to the liner. Liner plies are required to have at least nominal strength properties because they are often wound onto the tube-forming mandrel prior to the winding of the body ply and must therefore be strong and stiff enough to be wound without substantial stretching or wrinkling. As the foil layers tend to provide strength to liners, liners having such layers are referred to as "supported" liners.

Conventional liners generally also include a kraft paper backing on the foil for adhering the foil layer to the inner paperboard surface of the container. The smooth impervious surface of the foil resists traditional adhesives, thus the kraft paper backing is pre-adhered to the foil layer so that the liner and resulting paperboard tube can be manufactured more efficiently. A polymeric layer is provided on the surface of the foil that faces inward, toward the packaged food product. The polymeric layer prevents the food product from coming into contact with the foil layer, which in some cases can cause a reaction that can corrode the foil and discolor or otherwise adulterate the product. The polymer layer is normally a heat-sealable material permitting one edge portion of the liner strip to be heat sealed to an overlying opposite edge portion of the strip. The polymer layer may also improve the abrasion resistance of the foil, and further maintains a barrier in the event that tiny pinholes are present in the foil.

Despite the benefits provided by the foil and kraft paper layers, it is desirable to produce liners that omit these layers, as they are expensive, difficult to seal, difficult to adhere additional layers to, and greatly increase the liner thickness. Accordingly, it is desired to provide a container and a method of making such, which includes an "unsupported" polymer liner having the requisite barrier properties and simultaneously omitting the aluminum foil and corresponding kraft layers. Apart from reducing the expense and thickness of the resulting composite, providing a container having an unsupported polymer liner would also eliminate or at least reduce the problems attributed to forming "anaconda fold" seams, which are necessary to manufacture conventional supported liners.

In an anaconda fold, the underlying edge of the liner ply is folded back on itself and adhered to the overlying edge. The anaconda fold allows the polymeric layers on the surface of the foil layer to be heat sealed together. The thickness of an anaconda fold seam is equal to three thicknesses of the liner ply. Thus, with relatively thick supported liners (including kraft and foil layers), the anaconda fold seam presents difficulties when attempting to hermetically seal the ends of the tubular container. Specifically, the ends of the tube are often rolled outwardly after being cut so as to form a rolled circular bead or flange on one or both ends of the tube and then end caps or membranes are applied and usually sealed to the bead with an adhesive sealant, heat sealing or other technique. However, in the area where the thick anaconda fold seam forms a portion of the end surface, the end surface of the bead or flange can be substantially non-planer thus forming hill-like and/or valley-like irregularities. Accordingly, an extra amount of adhesive sealant or heat seal material may be required to fill the discontinuities and hermetically seal the tubular container.

Because of the problems noted above with respect to supported liners, efforts have been made toward developing methods and apparatus for making tubular composite containers having unsupported polymer liners in which the foil and kraft layers are not used. Additionally, methods and apparatus have been sought for making composite containers having liners formed without anaconda fold seams or with greatly reduced anaconda fold thicknesses. For example, the assignee of the present application has developed methods and apparatus for making composite containers with unsupported liners made of polymer film and without anaconda folds, as disclosed in commonly owned U.S. Pat. No. 5,846,619 entitled "Polymeric Liner Ply for Tubular Containers and Methods and Apparatus for Manufacturing Same" issued Dec. 8, 1998, and U.S. Pat. No. 5,829,669 entitled "Tubular Container and Methods and Apparatus for Manufacturing Same" issued Nov. 3, 1998, the entire disclosures of which are hereby incorporated herein by reference.

The '619 patent and '669 patents disclose composite container-forming methods and apparatus wherein, according to one embodiment, a polymeric liner strip is adhesively joined to a paperboard body-forming strip prior to being wrapped about a shaping mandrel. By "prelaminating" the polymeric liner strip and paperboard strip together, the liner is effectively structurally supported by the paperboard strip so that it is relatively easily advanced to the mandrel without becoming excessively stretched or otherwise misshapen in the process. The polymeric liner strip is offset relative to the paperboard to which it is adhesively joined such that a marginal edge portion of the liner strip extends beyond one edge of the paperboard strip. The laminated paperboard/polymeric strip is wrapped about the mandrel so that the edges of the paperboard strip overlap each other and the marginal edge portions of the polymeric liner overlap each other. One of the marginal edge portions of the liner strip includes a non-aqueous adhesive layer that is heat activatable. Before and/or while the laminated paperboard/polymeric strip is wrapped about the mandrel, the non-aqueous adhesive layer on the marginal edge portion is heated to at least its activation temperature, and the overlapping edges are heat sealed together. Thus, the resulting composite container has a polymeric liner formed without anaconda fold seams.

However, the apparatus used to laminate the body and liner plies together before wrapping the plies onto the mandrel may not be the most advantageous in some applications. For instance, in some cases a separate set of nip rollers is needed to effect the lamination. Additionally, it will be appreciated that both the liner supply and body ply supply rolls must be located on the same side of the mandrel, which can make the placement of the supply rolls and the routing of the plies to the mandrel more complicated than would otherwise be the case if both the liner and body plies did not have to approach the mandrel from the same side. Replacement of the rolls may also be more difficult where the two supply rolls are located close together as they would tend to be in order to make efficient use of space.

In view of such drawbacks, the assignee of the present application has also developed methods and apparatus for making tubular containers with unsupported film liners enabling either same-side or opposite-side winding of the liner strip onto the mandrel, as described in commonly owned U.S. Pat. No. 6,270,004 entitled "Tubular Composite Containers Having Unsupported Film Liners and Methods and Apparatus for Making Same" issued Aug. 7, 2001, and U.S. Pat. No. 6,350,500 entitled "Tubular Composite Containers Having Folded Unsupported Liners" issued Feb. 26, 2002, the disclosures of which are incorporated herein by reference.

In accordance with the methods and apparatus of the '004 patent, a polymer film liner is drawn from a liner supply and through a tension-controlling apparatus that maintains the liner tension low enough to prevent substantial misshaping of the liner strip, and the liner strip is wrapped about the mandrel prior to the paperboard body ply or plies being wrapped onto the mandrel. The inner surface of the liner, specifically that surface which contacts the mandrel as the tubular container is advanced, is comprised of a heat-sealable material. A heat-sealable material also forms at least part of the outer surface of the liner, specifically that surface which is adhesively joined to the paperboard body ply by a water-based or "wet" adhesive. One edge of the liner strip overlaps an opposite edge of the liner strip so that the heat-sealable materials on the inner and outer surfaces of the strip are in contact. The portion of the mandrel over which the overlap joint passes is raised to an elevated temperature just below the sealing temperature at which the heat-sealable materials are activated to seal to each other, thus preheating the overlap joint. Additional heat is applied locally by focused infrared and/or forced air heaters so as to raise the temperature of the overlap joint to at least the sealing temperature and thereby seal the overlap joint.

With the method of the '004 patent, the heat-sealable material on the inner surface of the liner strip is heated and softened as it passes over the heated portion of the mandrel, and this softening leads to greater friction between the liner strip and the mandrel. This friction, and resulting softening, could lead to "scuffing" of the polymer layer as it advances along the mandrel. To help reduce the friction, a lubricant may be applied to the inner surface of the liner strip, except for the edge portion to be heat sealed, just prior to winding the liner onto the mandrel. The lubricant may effectively cool the heat-sealable material and thereby aid in allowing the edge portion to remain hotter than the remainder of the heat-sealable layer. Unfortunately, however, providing lubricant in this way requires an extra operation and ultimately additional cost. Further, many commonly used lubricants leave a tacky residue on the mandrel that can cause dust to adhere to and accumulate on the mandrel, which is undesirable. Finally, lubricants used on containers holding food products must be FDA-approved and could also negatively affect the sealing of membranes onto the ends of the container.

The '500 patent removes the above lubrication challenges, by adding an additional folding operation. Specifically, the '500 patent is directed to a tubular composite container comprising a polymer liner strip having a heat-sealable layer facing outward, away from the mandrel as it is wrapped. The inner surface of the liner ply is composed of a hard polymer material whose melting temperature is substantially higher than the sealing temperature at which the heat sealable material softens, and therefore resists scuffing as the liner is advanced down the mandrel. Due to the inability of the hard polymer layer to readily seal to the heat-seal layer, one edge portion of the liner is folded such that, when wrapped, the heat-seal layer contacts the over-lapping folded edge of subsequent liner layers. Accordingly, the heat seal layer disposed on the folded edge portion may be readily heat-sealed to the heat seal layer of underlying opposing ply. Although significantly thinner than the anaconda folds used in supported liners, the fold required for the '500 patent does add additional thickness. Further, the additional folding operation required may add cost and a potential risk of assembly line downtime (if the edge folder becomes mis-threaded, damaged, etc.).

In addition to the structural limitations described above, the barrier properties provided by conventional unsupported polymer liners have also proved to be less than optimal. Traditionally, unsupported polymer liners employ a liquid/gas barrier in the form of a metalized polymer film (e.g., PET or OPP) to which heat-sealable coatings (e.g., PE, PP Metallocene, Transcend®, or Surlyn®) are extrusion-coated. As a result, once a PET film (typically produced by an extrusion process wherein the film is oriented in both the machine and cross-machine directions) has been produced it must undergo an additional metallization and/or coating operation to be viable as a liner. Further, while unsupported PET or OPP film liners are selected to replace the barrier properties provided by conventional foil layers, they do not achieve this goal in all cases, as these polymers have difficulty meeting the stringent Moisture Vapor Transmission Rate (MVTR) performance required for many applications, such as applications requiring an extended retail product shelf life where containers may be subject to high temperature/high humidity retail market conditions.

In light of the foregoing, it would be highly desirable to provide methods and apparatus capable of making a composite container with an unsupported polymer film liner that can readily be hermetically sealed without incorporating troublesome anaconda folds or excess lubricants that can adversely affect the membrane seal process. Furthermore, it would be desirable to provide methods and apparatus permitting the formation of such a container with few, if any, finishing steps such as folding, coating, metallization, or the like. Finally, it would also be desirable to produce methods and apparatus for producing an unsupported film liner that could adequately meet or exceed the high MVTR performance required for extended product shelf life.

### BRIEF SUMMARY OF THE INVENTION

The above needs are addressed and other advantages are achieved by the present invention, which includes methods and apparatus for making a tubular composite container having a paperboard body strip and an unsupported polymer film liner adhered thereto. The improved unsupported liner may be produced by blown film coextrusion, cast film coextrusion, or the like. Coextrusion processes are those designed for manufacturing multilayer, rather than single layer, polymer films and thus have two or more extruders feeding a common die assembly.

In one embodiment, a liner in accordance with the present invention comprises an unsupported multilayer polymer liner having, in order, a first sealant layer, a second adhesive layer, a third polyamide layer, a fourth adhesive layer, a fifth layer comprising an ethylene/vinyl alcohol copolymer, a sixth adhesive layer, a seventh polyamide layer, an eighth adhesive layer, a ninth high density polyethylene layer, and a tenth high-density polyethylene layer. The resulting liner can be wrapped about a tube-forming mandrel prior to the paperboard body plies, such that the first sealant layer is facing inward, toward the mandrel. The high density polyethylene (HDPE) layers are positioned on the opposite surface of the liner such that they contact the paperboard body plies which are subsequently wrapped on top of the liner.

The relatively low cost, HDPE layers bond with many sealants, including Surlyn® produced by Dupont, which is a preferred sealant according to the present invention. Suryln® and other ionomer resins have relatively low sealing or melting temperatures and thus can provide quick and efficient hermetic seals with a minimum of dwell time. Additionally, such resins accommodate a hermetic seal even through contamination, such as wax. Further, they are highly formable for easy winding during tube forming and FDA-approved for contact with food products.

Wax is sometimes introduced to the tube forming process when attempting to hermetically seal the ends of tubular containers produced on older tube forming machines. In these older machines, the tube is formed, cut and at least one tube end is rolled outwardly so as to form a rolled circular bead. A small amount of wax is placed on the bead to hold a closure membrane in place until it can be hermetically heat sealed to the sealant layer, which was outwardly exposed during the bead rolling. As a result, in order to effectuate proper sealing through the wax, sealants such as Surlyn® are preferably used.

If wax is not used to hold the closure membrane in place, as is the case in newer tube forming machines where vacuum pressure replaces the wax, an HDPE or blended layer could be used as a sealant instead of Surlyn®, to further reduce cost. Accordingly, a liner ply having a mandrel-contacting sealing surface composed of HDPE or Surlyn® and an opposite compatible surface composed of HDPE, could readily be adhered together in overlapping fashion and thereby eliminate the need for costly folding operations.

Sandwiched between the Surlyn® and HDPE layers are additional polymer layers comprised of polyamides and an ethylene/vinyl alcohol copolymer (EVOH). Preferred polyamides include nylon 6 and nylon 6/6, or the like as known to one of ordinary skill in the art. The polyamide layers provide improved abrasion protection from the food product contained within the container, such as from salt crystals in the case of potato chips. The ethylene/vinyl alcohol copolymer layer, in combination with HDPE and polyamide layers, provides significantly improved moisture vapor and oxygen barrier protection.

Polymeric adhesive layers (also referred to as "tie" layers) are provided to bind the sealant, HDPE and EVOH layers to the polyamide layers as discussed above. Preferred polymeric adhesives include the Bynel® line of adhesive resins produced by Dupont, or their equivalent as selected by one of ordinary skill in the art.

In a second preferred embodiment, a liner in accordance with the present invention comprises an unsupported multilayer polymer liner having, in order, a first sealant layer, a second adhesive or tie layer, a third polyamide layer, a fourth tie layer, a fifth layer comprising an ethylene/vinyl alcohol copolymer, a sixth tie layer, a seventh polyamide layer, an eighth tie layer, a ninth high density polyethylene layer, and a tenth high-density polyethylene layer. It will be noted by one of ordinary skill in the art that the fourth and sixth tie layers may be optionally provided to strengthen the liner; however, they may also be omitted as polyamides, such as nylon, readily adhere to EVOH when extruded, producing polymer films of adequate strength.

For example, in yet another preferred embodiment, these tie layers are omitted such that the present invention comprises an unsupported multilayer polymer liner having, in order, a first sealant layer, a second adhesive or tie layer, a third polyamide layer, a fourth layer comprising an ethylene/vinyl alcohol copolymer, a fifth polyamide layer, an sixth tie layer, a seventh high density polyethylene layer, and an eighth high-density polyethylene layer. Once again, depending upon the application, a sealant layer comprised of an ionomer resin such as Surlyn®, an HDPE or blended layer may be used.

The multilayer polymer film used to produce liners in accordance with the present invention is typically manufactured via a process known as blown film coextrusion. Although the unsupported liners of the present invention could readily be produced according to the methods described in the above referenced '619, '669, '004 and '500 patents, the present invention is uniquely suited to a single-operation coextrusion process such as blown film coextrusion. Specifically, during this process each polymer resin is first melted by exposure to heat and pressure in the barrel of an extruder. The homogeneous polymer "melt" is then pumped into a die ring along with melts from additional extruders. The layered melts are then forced through a narrow slit in the die ring. In blown film coextrusion, the slit is generally circular such that the resulting thin film has a tubular shape, also called a "bubble." The bubble is expanded by blowing air into it, and is then collapsed into a lay flat sheet by passing it through nip rolls as known to one of ordinary skill in the art. The lay flat sheet is wound onto a roll, which subsequently is processed to convert it into liner supply rolls.

Ultimately, the multi-layer polymer liner produced from the above process is then wound about a mandrel during the tube forming operation. As discussed above, the liner strip of one preferred embodiment of the present invention includes a layer of heat-activated sealing material, such as Suryln®, covering at least a first edge portion of the liner strip and a layer of compatible polymer material, such as HDPE, covering at least an opposite second edge portion of the liner strip. The sealing material has a predetermined sealing temperature at which the material is activated to form a bond with the compatible polymer material. The liner strip is wrapped around the mandrel with the sealing material on the first edge portion of the liner strip facing inward, toward the mandrel, and the compatible polymer material on the second edge portion facing outward, toward the overlying liner ply. The first edge portion is overlapped by the second edge portion to form an overlap joint therebetween, thus resulting in the layer of the sealing material on the first edge portion in direct contact with the compatible material on the second edge portion.

As mentioned above, should a wax binder prove unnecessary for the membrane sealing operation, a HDPE layer could be used in place of Surlyn® as the sealant layer so as to significantly reduce the cost of the liner. Accordingly, another preferred embodiment of the present invention comprises a tubular composite container having a co-extruded multilayer liner that includes a first high density polyethylene layer, a second tie layer, a third polyamide layer, a fourth tie layer, a fifth layer comprising an ethylene/vinyl alcohol copolynier, a sixth tie layer, a seventh polyamide layer, an eighth tie layer, a ninth high density polyethylene layer, and a tenth high density polyethylene layer. Once again, depending upon the application, the fourth and sixth tie layers may optionally be omitted producing yet another preferred embodiment of the present invention wherein the polyamide layers are bonded directly to the EVOH layer.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:

The above and other objects, features and advantages of the invention will become more apparent from the following description of certain preferred embodiments thereof, when taken in conjunction with the accompanying drawings in which:
**Figure 1** is a perspective view of a tubular composite container having an unsupported liner in accordance with a preferred embodiment of the present invention;
**Figure 2** is a cross-sectional view taken on line **2-2** of **Figure 1** through an overlap seam of an unsupported polymer liner for a tubular composite container in accordance with one preferred embodiment of the present invention;
**Figure 3** is a cross-sectional view taken on line **3-3** of **Figure 2**, showing the multilayer construction of the polymer film liner in accordance with one preferred embodiment of the present invention;
**Figure 4** is a cross-sectional view of a second preferred embodiment, showing the multilayer construction of the polymer film in accordance with a second preferred embodiment of the invention;
**Figure 5** is a cross-sectional of a third preferred embodiment, showing the multilayer construction of the polymer film liner in accordance with a third preferred embodiment of the present invention;
**Figure 6** is a cross-sectional view of a fourth preferred embodiment, showing the multilayer construction of the polymer film in accordance with a fourth preferred embodiment of the invention;
**Figure 7** is a top view of a schematic of a multilayer blown film coextrusion process that is preferred, but not required, to produce an unsupported multilayer liner in accordance with one preferred embodiment of the present invention;
**Figure 8** is a schematic view of a preferred blown film coextrusion process, advantageously used to manufacture a preferred multilayer polymer liner in accordance with one embodiment of the present invention;
**Figure 9** is a schematic view of an apparatus in accordance with one preferred embodiment of the invention for making tubular composite containers with unsupported polymer film liners.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

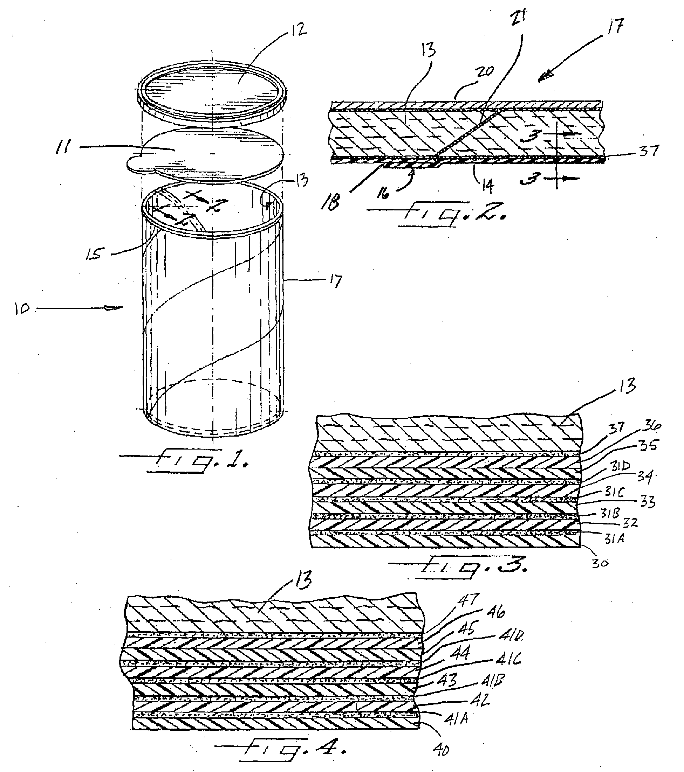

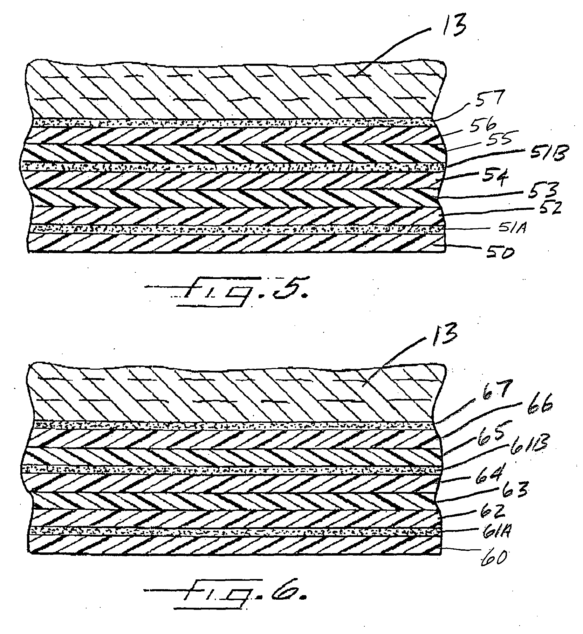

With reference to **Figures 1** and **2**, a composite container **10** is shown having an unsupported liner in accordance with the present invention. Although illustrated as having a circular cross-section, the tubular container **10** may have any cross-section shape that can be formed by wrapping the tube around an appropriately shaped mandrel. For example, the tube can be formed in a rectangular shape with rounded comers. The embodiment illustrated in **Figure 1** is particularly advantageous for packaging potato crisps or chips and includes a flexible membrane seal **11** and a reusable plastic end cap **12** over the seal. Various other end closures may be used, depending upon the type of product that is to be packaged. For example, where dough is to be packaged, the end caps are typically constructed of metal and are crimp sealed onto the ends of the container.

As illustrated generally by **Figure 1**, a tubular container **10** according to the present invention, includes a tube wall **17** having a body ply **13** that is preferably formed of paperboard, and a liner ply **14** that is preferably comprised of a polymeric material and adhered to the inner surface of the body ply **13**. The upper end of the tubular container **10** is rolled outwardly so as to form a bead **15** or flange and the membrane seal **11** is hermetically sealed to the top of the bead with a sealant (not shown) that is typically a part of the membrane **11**. In conventional tube forming operations a bead of wax (not shown) is used to hold the membrane seal **11** to the bead **15** prior to final package sealing. Accordingly, a sealing material that readily seals through wax contaminants is preferred. The end cap **12** is then snapped over the bead **15** and may be reused after the membrane seal **11** has been removed. A metal closure (not illustrated) can be secured to the opposite end of the tubular container **10**.

**Figure 2** illustrates a section view of a preferred tube wall **17**, taken through a seam where various plies are joined together. The paperboard body ply **13** is made of a relatively thick and stiff paperboard. Accordingly, in some types of containers such as self-opening containers, the edges are first skived and then joined together during the tube forming process with an adhesive **21** in order to create a strong seam. The liner ply **14** is adhered to the inner surface of the body ply **13** with a wet adhesive **37** and the overlapping edges of the liner ply **14** are adhered together to ensure that the container **10** is completely sealed. A label ply **20** is preferably adhered to the outer surface of the body ply **13** having various graphics and/or indicia printed thereon regarding the product within the container. The liner ply **14** includes an overlap seal **16** formed by overlapping an edge portion **18** of the liner with an opposite edge portion of the liner and sealing the overlapping edge portions together, as further described below.

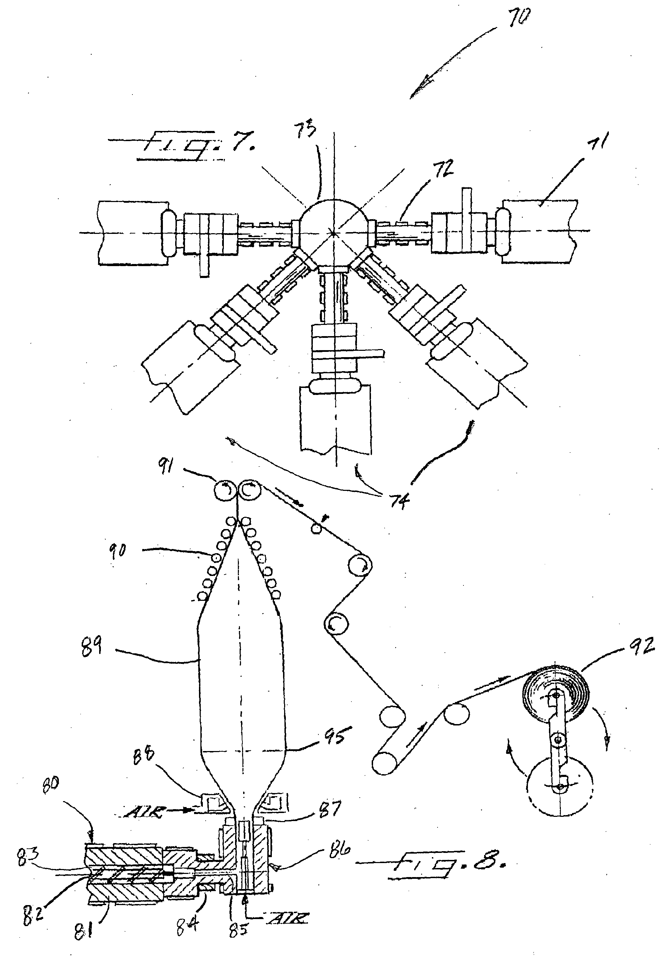

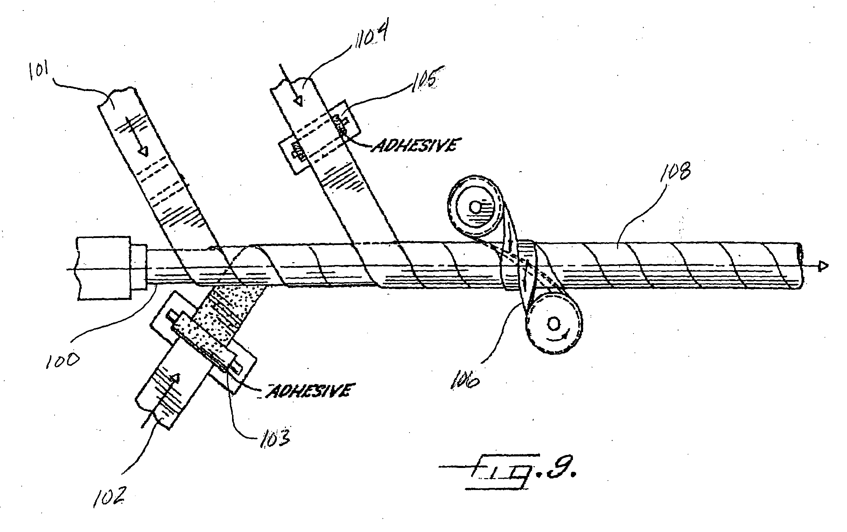

A preferred liner in accordance with one embodiment of the present invention is illustrated in **Figure 3**. Specifically, the preferred liner ply **14** includes a sealant layer **30** that is adhered to a polyamide layer **32** via a polymeric adhesive **31A.** The sealant layer **30** is comprised of a heat-activated sealing material, such as Suryln® or other equivalent ionomer resin. Ionomer resins are particularly effective sealants as they seal through the wax (not shown) used by older tube forming machines to hold the membrane seal **11** in place prior to final package sealing. Newer tube forming machines utilize vacuum pressure to hold the membrane seal **11** in place, and thus a material such as HDPE (as shown in **Figures 4** and **6**), which is less expensive but does not seal as well over wax, may be used as a sealant. Regardless of the sealant selected, each has a predetermined sealing temperature at which the material is activated to form a bond with itself or with a compatible polymer material.

A polyamide layer **32** may be comprised of materials such as nylon, as described above, which bring durability and abrasion resistance to the liner. Immediately above the polyamide layer **32** is an ethylene/vinyl alcohol (EVOH) copolymer layer **33** that provides excellent oxygen barrier properties. An additional polyamide layer **34** is positioned above the EVOH layer **33**, such that the EVOH layer **34** is effectively sandwiched between the two polyamide layers **32, 34**. In the preferred embodiment illustrated by **Figure 3**, polymeric adhesive layers **31B, 31C** are used to bond the polyamides to the sealant and EVOH as shown.

Finally, two high-density polyethylene layers (HDPE) **35, 36** are provided to complete this embodiment of the improved multilayer liner of the present invention. Again, a polymeric adhesive layer **31D** is used to bond the HDPE layers **35, 36** to the upper polyamide layer **34** as shown. As mentioned above, the HDPE layers **35**, **36** provide a compatible surface for bonding with the sealant layers **30** of underlying plies as the tube is wound in an overlapping fashion about the mandrel. Further, the HDPE layers **35, 36** simultaneously combine with the EVOH and polyamide layers **32, 33, 34** to provide an enhanced moisture vapor and oxygen barrier.

**Figure 4** illustrates another preferred embodiment of the present invention, wherein the preferred liner ply **14** is again bonded to a paperboard ply **13** via a wet adhesive **47**. In this preferred embodiment, the sealant layer **40** is comprised of HDPE rather than Surlyn®. This first HDPE, or sealant layer **40**, is adhered to the polyamide/EVOH/polyamide layers **42, 43, 44** by polymeric adhesive layers **41A**, **41B, 41C** as described above. Finally, as with the preferred embodiment described in **Figure 3**, the final two layers consist of two HDPE layers **45, 46** that are joined to the polyamide layer **44** positioned below, via a polymeric adhesive layer **41D**.

**Figure 5** illustrates yet another preferred embodiment of the present invention. In this preferred embodiment, the sealant layer **50** is comprised of Surlyn®, as was the case in the preferred embodiment illustrated in **Figure 3.** In contrast to **Figure 3,** however, the embodiment depicted in **Figure 5** provides no tie layers between the polyamide/EVOH/polyamide layers **52, 53, 54.** Although tie layers **51A** and **51B** are provided to bind the sealant layer **50** to the lower polyamide layer **52,** and the HDPE layers **55, 56** to the upper polyamide layer **54,** additional tie layers are not required to bind the polyamide layers to the EVOH. Finally, as with the preferred embodiments discussed above, the HDPE layers **55, 56** are joined to the body ply **13** via a wet adhesive **57**.

**Figure 6** depicts another preferred embodiment of the present invention, wherein the polyamide/EVOH tie layers have been removed. Specifically, **Figure 6** describes a multilayer film liner having a sealant layer **60** comprised of HDPE, that is bonded to polyamide/EVOH/polyamide layers **62, 63, 64** via a tie layer **61A**. Once again, the polyamide/EVOH/polyamide layers **62, 63, 64** are bonded to the above HDPE layers **65, 66** by an additional tie layer **61B**. Finally, the HDPE layers **65, 66** are bonded to the body ply via a wet adhesive **67**.

The above described multilayer polymer films may be produced by any number of processes known to one of ordinary skill in the art. **Figure 7** provides an overhead schematic of one preferred method for producing the multilayer polymer film according to the present invention. Specifically, the process of blown film coextrusion is illustrated by **Figures 7** and **8**. This schematic has been provided for illustration purposes only, as many additional processes are currently known and could readily be employed to produce multilayer films in accordance with the invention. As shown, the coextrusion of a multilayer polymer film generally requires a coextrusion apparatus **70**, having multiple extruders **71** and a central die assembly **73**. Further, heaters **72** are provided for melting the polymer resin as it is forced into die assembly **73**.

Specifically with regard to the blown film coextrusion process illustrated in **Figure 8**, individual polymer resins are mixed and driven from feeder chambers (not shown) by elongate screws **82** that are housed within extruder cylinders **81**. The resin **83** is then driven over heaters **84** that warm the polymer resin above its melting temperature so as to produce a homogenous polymer melt **85**. The melt **85** is forced into a cylindrical die **86** from either the bottom or the side. The melt **85**, along with melt from additional extruders, is contacted by streams of air, and forced through a circular die ring **87** so as to form a thick-walled, multilayer tube.

The tube, while still in a molten state, is forced through a mandrel **88** and expanded into a long "bubble" **89** of a desired diameter and a correspondingly decreased thickness. This expansion results from an additional stream of air inside the bubble **89**, which is introduced into the tube through the center of the mandrel **88**. As the bubble of the polymer melt moves away from the die **86**, it is cooled by the ambient or chilled air. The point at which the bubble reaches its final size is called a frost line **95**. Above this point the multilayer film is solid and has a hazier appearance than below. Once cooled, the blown film bubble rising up from the die is pulled into a complex takeoff system generally referred to as a multidecked tower (not shown). The multidecked tower consists of nip rolls **91** and other idlers or guide rolls, wherein the blown film is transferred to a slitter (not shown), cut into sheet form, and ultimately wound onto a core thereby forming a liner supply roll **92**.

As discussed above, the orientation of the coextrusion process depicted in **Figure 8** is provided for illustration purposes only, and is not intended to be limiting. One of ordinary skill in the art may readily devise many additional multiple extruder/die configurations for blown film or die-cast coextrusion. For example, the polymer liner of the present invention could be produced via standard die-cast coextrusion wherein the die assembly includes a horizontal slit, such that molten polymer sheets are produced rather than the tubes discussed above. Regardless of the particular extruder configuration, the coextrusion process described above offers a number of advantages over conventional methods of producing unsupported polymer liners. For example, as described above, additional metallization or coating operations are not needed once a preferred polymer film liner has been produced. The polymer film liner of the present invention possesses all of the needed strength and barrier properties and is, therefore, complete when formed.

Once a liner supply roll **92** has been produced, it is then available for tubular composite container assembly. **Figure 9** illustrates a preferred tube assembly process in accordance with the present invention. To form a composite tube, an individual liner ply **101** is advanced from a liner supply roll (not shown) and wrapped about a tube winding mandrel **100**. Various types of devices may be used for controlling liner tension such as idlers, rollers, belts, and the like (not shown). A paperboard body ply **102** is thereafter coated on its interior face with an adhesive from an adhesive supply **103** and wound onto the liner ply layer **101**. Thereafter, additional paperboard plies **104**, may be wound in overlapping relation onto the first paperboard layer and the liner layer in order to build up the structure of the paperboard wall. Although only one additional ply **104** is shown, one of ordinary skill in the art will understand that a plurality of plies may be added until the tube reaches a desired wall thickness. As with the first paperboard ply **102**, each of the additional plies **104** are treated on their face with a wet adhesive from an adhesive supply **105** or otherwise coated with adhesive prior to winding onto the mandrel **100.**

A rotating belt **106**, which is driven by a motor (not shown), rotates the entire multiple layered structure **108** in screw fashion, thereby causing the structure to move to the right on the mandrel **100.** Thereafter, other plies, such as a non-structural label ply (not shown), may be applied to the outside of the partially formed tube **108** to thereby form the completed tube structure **10** illustrated in **Figure 1**. Further, the continuous tube **108** is thereafter cut into desired tube lengths by a rotating saw blade or the like (not shown), as will be apparent to those skilled in the art. Typically, the tube length will be chosen depending on the desired end use for the paperboard tube.

As is well known in the art, the process illustrated in **Figure 9** is subject to many changes. Thus, the plies could all be fed from the same side or from different sides of the mandrel. Moreover, the plies can be fed on top or beneath the mandrel as desired. The tubes and the tube-forming process illustrated in **Figures 1 and 9** are spiral wound tubes and processes. However, the invention is also applicable to convolute wound tubes produced by wrapping a single sheet of paperboard, preferably with pre-adhered liner and label, about a mandrel.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An unsupported polymeric liner for a tubular container comprising, in order:
a first sealant layer;
a second adhesive layer;
a third polyamide layer;
a fourth adhesive layer;
a fifth layer comprising an ethylene/vinyl alcohol copolymer;
a sixth adhesive layer;
a seventh polyamide layer;
an eighth adhesive layer;
a ninth high density polyethylene layer; and
a tenth high density polyethylene layer.

2. An unsupported polymeric liner for a tubular container in accordance with Claim 1, wherein the first sealant layer is comprised of an ionomer resin.

3. An unsupported polymeric liner for a tubular container in accordance with Claim 1, wherein the first sealant layer is comprised of ethylene/methacrylic acid copolymer partially neutralized with zinc or sodium ions.

4. An unsupported polymeric liner for a tubular container in accordance with Claim 1, wherein the first sealant layer is comprised of a high density polyethylene.

5. An unsupported polymeric liner for a tubular container in accordance with Claim 1, wherein the third and seventh polyamide layers are comprised of nylon.

6. An unsupported polymeric liner for a tubular container in accordance with Claim 1, wherein the polymeric liner is produced via blown film coextrusion.

7. An unsupported polymeric liner for a tubular container in accordance with Claim 1, wherein the polymeric liner is produced via die cast coextrusion.

8. A method for producing a lined tubular composite container comprising the steps of:
advancing an unsupported multilayer polymeric liner ply from a liner supply roll toward a mandrel, wherein the liner ply includes, in order, a first sealant layer, a second adhesive layer, a third polyamide layer, a fourth layer comprising an ethylene/vinyl alcohol copolymer, a fifth polyamide layer, a sixth adhesive layer, a seventh high density polyethylene layer and an eighth high density polyethylene layer;
winding the liner ply about the mandrel in partially overlapping fashion, such that the first sealant layer on one edge of the liner ply contacts the high density polyethylene layer of an opposite edge of the liner ply and is sealed thereto so as to form a wound liner tube; and
winding at least one paperboard body ply about the mandrel, and adhering an inner surface of the at least one paperboard body ply to the liner ply so as to form a lined tubular composite container.

9. A method for producing a lined tubular container in accordance with Claim 8,
wherein the liner ply is wound about the mandrel and sealed together to form a wound liner tube prior to the step of winding the at least one paperboard ply about the mandrel.

10. A method for producing a lined tubular container in accordance with Claim 8,
wherein the first sealant layer of the liner ply is heat-activatable, and further comprising the step of heating at least the edges of the liner ply to seal the edges together.

11. A method for producing a lined tubular container in accordance with Claim 8,
wherein the first sealant layer of the liner ply is comprised of ethylene/methacrylic acid copolymer partially neutralized with zinc or sodium ions.

12. A method for producing a lined tubular container in accordance with Claim 8,
wherein the first sealant layer of the liner ply is comprised of high density polyethylene.

13. A method for producing a lined tubular container in accordance with Claim 8,
wherein the third and fifth polyamide layers are comprised of nylon.

14. A method for producing a lined tubular container in accordance with Claim 8, further comprising:
an alternate adhesive layer positioned between the third polyamide layer and the fourth layer comprising an ethylene/vinyl alcohol copolymer.

15. A method for producing a lined tubular container in accordance with Claim 8, further comprising:
an alternate adhesive layer positioned between the fourth layer comprising an ethylene/vinyl alcohol copolymer and the fifth polyamide layer.

16. A composite container having a co-extruded polymer liner comprising:
a liner ply, comprised of, in order, a first sealant layer, a second adhesive layer, a third polyamide layer, a fourth layer comprising an ethylene/vinyl alcohol copolymer, a fifth polyamide layer, a sixth adhesive layer, a seventh high density polyethylene layer and an eighth high density polyethylene layer; and
at least one paperboard body ply;
wherein the liner ply is wound about a mandrel in a partially overlapping fashion, such that the first sealant layer on one edge of the liner ply contacts the high density polyethylene layer of an opposite edge of the liner ply and is sealed thereto so as to form a wound liner tube; and
wherein the at least one paperboard body ply is wound about the mandrel, and adhered at an inner surface of the at least one paperboard body ply to the liner ply so as to form a lined tubular composite container.

17. A composite container in accordance with Claim 16, wherein the first sealant layer of the liner ply is comprised of an ionomer resin.

18. A composite container in accordance with Claim 16, wherein the first sealant layer of the liner ply is comprised of ethylene/methacrylic acid copolymer partially neutralized with zinc or sodium ions.

19. A composite container in accordance with Claim 16, wherein the first sealant layer of the liner ply is comprised of a high density polyethylene.

20. A composite container in accordance with Claim 16, wherein the third and fifth polyamide layers are comprised of nylon.

21. A composite container in accordance with Claim 16, wherein the liner ply is produced via blown film coextrusion.

22. A composite container in accordance with Claim 16, wherein the liner ply is produced via die cast coextrusion.
